# EUROPÄISCHE PATENTSCHRIFT

(11) **EP 1 290 056 B1**
(45) Veröffentlichungstag und Bekanntmachung des Hinweises auf die Patenterteilung: **20.09.2006**
(21) Anmeldenummer: 01936406.6
(22) Anmeldetag: 30.05.2001
(51) Int. Cl.: C08G 18/12, C09J 175/06, C08G 18/42

(54) **POLYURETHAN-ZUSAMMENSETZUNGEN AUF DER BASIS VON POLYESTER-BLOCK-COPOLYMEREN**
POLYURETHANE COMPOSITIONS BASED ON POLYESTER BLOCK COPOLYMERS
COMPOSITIONS DE POLYURETHANNE A BASE DE COPOLYMERES SEQUENCES DE POLYESTER

(30) Priorität: 10.06.2000 DE 10028810
(43) Veröffentlichungstag der Anmeldung: 12.03.2003
(73) Patentinhaber: Henkel Kommanditgesellschaft auf Aktien, 40589 Düsseldorf (DE)
(72) Erfinder: KREBS, Michael, 40724 Hilden (DE); LOHR, Christoph, 42117 Wuppertal (DE); BRENGER, Andreas, 40221 Düsseldorf (DE); SCHEFFLER, Ingolf, 41470 Neuss (DE)
(86) Internationale Anmeldenummer: PCT/EP2001/006127
(87) Internationale Veröffentlichungsnummer: WO 2001/096436

(56) Entgegenhaltungen:
- WO-A-01/46330
- DE-A- 19 961 941
- US-A- 5 137 984
- US-A- 5 965 662

## Beschreibung

Die Erfindung betrifft Zusammensetzungen enthaltend Umsetzungsprodukte eines Polyisocyanats mit einem Polyester-Block-Copolymer sowie deren Verwendung als Schmelzklebstoff und ein Verfahren zu deren Herstellung.

Umsetzungsprodukte eines stöchiometrischen Überschusses von Polyisocyanaten mit Polyolen - sogenannte Polyurethan-Prepolymere mit Isocyanat-Endgruppen - finden Anwendung in einer Vielzahl von Gebieten beispielsweise als Dichtstoffe, Beschichtungsmaterialien oder Klebstoffe. Wenn diese Zusammensetzungen bei Raumtemperatur fest sind und unter Ausschluß von Feuchtigkeit in der Wärme bzw. Hitze schmelzbar sind, können sie als reaktive Schmelzklebstoffe eingesetzt werden. Reaktive einkomponentige Polyurethan-Schmelzklebstoffe im Sinne dieser Erfindung sind also feuchtigkeitshärtende bzw. feuchtigkeitsvernetzende Klebstoffe, die bei Raumtemperatur fest sind und in Form ihrer Schmelze als Klebstoff appliziert werden, und deren polymere Bestandteile Urethangruppen sowie reaktionsfähige Isocyanatgruppen enthalten. Durch das Abkühlen dieser Schmelze über dem Auftrag auf das Substrat und dem weiteren Kühlen der Schmelze durch die Substrat-Teile erfolgt zunächst eine rasche physikalische Abbindung des Schmelzklebstoffes durch dessen Erstarren, gefolgt von einer chemischen Reaktion der noch vorhandenen Isocyanatgruppen mit Feuchtigkeit aus der Umgebung zu einem vernetzten unschmelzbaren Klebstoff.

Reaktive Schmelzklebstoffe auf der Basis von Isocyanat-terminierten Polyurethan-Prepolymeren sind im Prinzip bekannt, so beschreiben H.F. Huber und H. Müller in "Shaping Reactive Hotmelts Using LMW Copolyesters", Adhesives Age, November, 1987, Seite 32 bis 35 die Kombination von Isocyanat-terminierten amorphen und kristallinen Polyestern, die gute Haftung zu den verschiedensten Substraten haben sollen. Formulierungen, die Isocyanat-terminierte Polyester-Block-Copolymere enthalten, werden nicht offenbart.

Die EP-A-340906 beschreibt Polyurethan-Schmelzklebstoffzusammensetzungen, enthaltend eine Mischung von mindestens 2 amorphen Polyurethanprepolymeren, die dadurch gekennzeichnet sind, daß die Prepolymeren unterschiedliche Glasübergangstemperaturen haben. Derartige Mischungen von zwei Prepolymeren sollen die Eigenschaften des Klebstoffes dahingehend verbessern, daß sie schnell abbinden, unmittelbar nach dem Abbinden noch flexibel sind und nach dem Aushärten eine gute Hitzestabilität haben.

Die DE-A-3827224 beschreibt rasch abbindende, feuchtigkeitshärtende Schmelzklebstoffe aus Umsetzungsprodukten von Polyisocyanaten und Hydroxypolyestern. Die Hydroxypolyester sind dabei bevorzugt rein aliphatisch und weisen mindestens 12 Methylengruppen in der Polyestereinheit aus Diol und Dicarbonsäure auf. Als Diole können dabei auch Etherdiole, daß heißt oligomere bzw. Polymere auf Basis Ethylenglycol oder Butandiol-1,4 enthalten sein, dies ist jedoch nicht bevorzugt.

Die EP-A-455400 beschreibt eine Mischung aus Isocyanat-terminierten Polyurethan-Prepolymeren, die im Wesentlichen aus einem ersten kristallinen Prepolymer basierend auf Polyhexamethylenadipat und einem zweiten Prepolymeren basierend auf Polytetrametylenetherglycol besteht. Es wird angegeben, daß diese Zusammensetzungen sehr gute Haftung auf einer Vielzahl von Oberflächen haben soll.

Die EP-A-568607 beschreibt eine Mischung von Isocyanat-terminierten Polyurethan-Prepolymeren enthaltend ein erstes Prepolymer basierend auf dem Reaktionsprodukt eines wenigstens teilkristallinen Polyesterpolyols und einem Polyisocyanat und einem zweiten Prepolymer basierend auf dem Reaktionsprodukt eines Poly(tetramethylenether)glycols und einem Polyisocyanat sowie einem dritten Prepolymer basierend auf dem Reaktionsprodukt aus einem amorphen Polyesterpolyol und einem Polyisocyanat. Vorzugsweise soll das amorphe Polyesterpolyol für das dritte Prepolymer zumindest anteilweise aus aromatischen Bausteinen aufgebaut sein. Um die kohäsive Festigkeit der Schmelzklebstoffe zu verbessern, soll das Molekulargewicht, insbesondere des glasartigen Polyesterpolyols möglichst hoch sein. Dies resultiert jedoch in extrem hochviskosen Polymeren, die schwierig zu mischen sind und schwierig bei der Anwendungstemperatur zu applizieren sind. Es wird angegeben, daß diese Schmelzklebstoffe besonders geeignet sind um polymere Substrate wie Polystyrol oder Polymethylmethacrylat zu verkleben.

Die WO 9115530 beschreibt feuchtigkeitshärtende Polyurethanschmelzklebstoffe, die die Eigenschaften von thermoplastischen Schmelzklebstoffen und reaktiven Klebstoffen vereinigen. Es werden Mischungen aus einem thermoplastischen Elastomer auf der Basis eines Polyester-Polyether-Copolymers und einem Polyisocyanatprepolymer beschrieben. Dabei soll das thermoplastische Elastomer ein segmentiertes thermoplastisches Elastomer mit harten und weichen Segmenten sein und das Polyisocyanatprepolymer soll das Reaktionsprodukt eines Polyols mit einem polyfunktionellen Isocyanat mit einer Isocyanatfunktionalität von 2 oder mehr sein. Ein bevorzugtes Polyol für das Polyurethanprepolymer ist das Poly(tetramethylenether)gycol. Es wird angegeben, daß diese Klebstoffe zur Verklebung von Glas, Metall und einer Reihe von Kunststoffen geeignet sind.

Die noch unveröffentlichte DE-A-19961941.7 beschreibt Zusammensetzungen enthaltend Umsetzungsprodukte eines Polyisocyanats mit einem Polyester-Polyether-Copolymer, ein Verfahren zu deren Herstellung und ihre Verwendung als reaktive Schmelzklebstoffe. Dort wird vorgeschlagen, diese Copolymeren aus carboxylterminierten Polyester-Bausteinen und Polyether-Polyolen herzustellen. Obwohl diese Schmelzklebstoffe bereits viele technische Anforderungen an moderne Schmelzklebstoffe erfüllen, lassen sie sich in etlichen Bereichen nicht einsetzen.
Trotz des umfangreichen Standes der Technik besteht also weiterhin Bedarf an verbesserten Polyurethan-Zusammensetzungen, die sich für den Einsatz als Schmelzklebstoffe eignen. Insbesondere sollen die für die Schmelzklebstoffe eingesetzten Rohstoffe leicht und kostengünstig zugänglich sein. Eine bessere Verträglichkeit der einzelnen Polymerkomponenten ist für eine problemlose Applikation wünschenswert. Außerdem sollen die Schmelzklebstoffe ein breites Adhäslonsspektrum zu einer Vielzahl von Substraten haben und ein möglichst hohes Festigkeitsniveau nach der Aushärtung.

Die erfindungsgemäße Lösung der Aufgabe Ist den Patentansprüchen zu entnehmen.

Sie besteht im Wesentlichen in der Bereitstellung -einer feuchtigkeitshärtenden Polyurethan-Zusammensetzung mit reaktionsfähigen Isocyanatgruppen für die Anwendung in Schmelzklebstoffen enthaltend
a.) ein Umsetzungsprodukt eines Polyisocyanats mit einem Polyester-Block-Copolymer der Formel (I),

   HO―R²―O―A―O―R¹―OH (I),

   welches herstellbar ist durch Kondensation eines entsprechenden carboxylterminierten Polyesters mit einem Polyetherol, einem hydroxyfunkfionellen Polybutadien, einem Polycarbonatdiol oder einem weiteren Polyesterdiol oder durch Aufpolymerisieren von Caprolacton auf einen hydroxyfunktionellen Polyester,
b.) ggf. ein Umsetzungsprodukt eines Polyisocyanats mit einem Polyesterpolyol und/oder
c.) ggf. ein Umsetzungsprodukt eines Polyisocyanats mit einem Polyetherpolyol
   wobei A =―R³―X―C(O)―R⁴―C(O)―X―R³―,
   - R¹ und R²: unabhängig voneinander (-(CH₂)₄-O-(CH₂)₄-O)ₒ₋₁-(CH₂)4-O-(CH₂)₄, (-C₃H₆O-C₃H₆-O)ₒ₋₁-C₃H₆-O-C₃H₈, (-C₂H₄-O-C₂H₄)ₚ₋₁-C₂H₄-O-C₂H₄, der Rest eines Polybutadiens, Polycarbonates, eines Polyesters oder eines Polycaprolactons oder deren Kombination sein kann,
   - X + ³: Rzusammen eine kovalente Bindung oder X = O und R³ = -(CH₂)ₘ- und
   - R⁴: ein Rest eines Carboxyl-terminierten Polyesters aus einem C₄ bis C₁₂ - Diol und einer C₆ bis C₁₄ - Dicarbonsäure nach Entfernen der terminalen Carboxylgruppen bedeuten und
   m = 4 bis 12, o = 5 - 80 und p = 5 - 80 ist.

Vorzugsweise ist -O-A-O- der Rest eines Hydroxyl-terminierten Polyesters aufgebaut aus aliphatischen Dicarbonsäuren und difunktionellen aliphatischen Alkoholen, Bevorzugte Beispiele für aliphatische Dicarbonsäuren sind Adipinsäure. Pimelinsäure, Korksäure, Azelainsäure, Sebacinsäure, Undecandisäure, Dodecandisäure oder ggf, deren, Mischungen, Bevorzugte Beispiele für difunktionelle aliphatischen Alkohole sind Butandiol, Hexandiol, Octandiol, Decandiol, Dodecandiol oder ggf. deren Mischungen. Besonders bevorzugt sind dabei Dicarbonsäuren und Diole mit einer geraden Anzahl von Kohlenstoffatomen.

Besonders bevorzugte Hydroxi-terminierte Polyesterbausteine sind Polyesterbausteine aus Adipinsäure, Sebacinsäure oder Dodecandisäure und 1,4-Butandiol, 1,6-Hexandiol, 1,8-Octandiol, 1,10-Decandiol oder 1,12-Dodecandiol. Der Polyesterblock kann dabei ein Molekulargewicht zwischen 1000 und 10000 haben, vorzugsweise liegt das Molekulargewicht zwischen 1500 und 8000.
R¹ und/oder R² sind Blöcke aufgebaut aus Polyetherolen wie Poly(oxytetramethylen)glycol, auch Poly-tetrahydrofuran (Poly-THF) genannt, Poly(oxyalkylen)glycolen wie Poly(oxyethylen)glycol, Poly(oxypropylen)glycol, Poly(oxybutylen)glycol oder deren Copolymeren sowie Polybutadien, Polycarbonat oder Polycaprolacton, wobei letzteres besonders bevorzugt ist. Prinzipiell kann R¹ und/oder R² auch ein weiterer Block eines Polyesters sein, der andere Bausteine als der Polyesterblock -O-A-O- enthält. Wenn der Polyetherblock aus Poly-THF besteht, soll das Molekulargewicht zwischen 250 und 6000, vorzugsweise zwischen 600 und 4000 liegen. Wenn der Polyetherblock aus Poly(oxyalkylen)glycolen besteht, hat er ein Molekulargewicht zwischen 1000 und 6000, vorzugsweise zwischen 1000 und 4000. Im Falle daß R¹ und/oder R² Polycaprolacton ist, liegt das Molekulargewicht dieses Blocks zwischen 80 und 4000, vorzugsweise zwischen 500 und 4000.

Das Copolymer der Formel (I) kann durch Kondensation eines entsprechenden carboxylterminierten Polyesters mit einem Polyetherol, hydroxyfunktionellem Polybutadien, Polycarbonatdiol oder einem weiteren Polyesterdiol hergestellt werden. Im Falle des Polycaprolacton-haltigen Block-Copolymers, wird von einem hydroxyfunktionellen Polyester ausgegangen und Caprolacton aufpolymerisiert. Prinzipiell ist es jedoch auch möglich ein derartiges Copolymer durch Kondensation der Einzelkomponenten Polyetherpolyol, aliphatische Dicarbonsäure und difunktioneller Alkohol in einem einzigen Kondensationsschritt herzustellen.

Eine bevorzugte Ausführungsform des Polyester-Block-copolymers gemäß Formel (I) ist aus einem zentralen Polyester-Block bestehend aus Hexandioladipat oder einem Polyester auf Basis Dodecandisäure und Hexandiol oder Octandiol und einem einseitig oder beidseitig auf die Hydroxylgruppen aufpolymerisierten Polycaprolacton hergestellt, daß heißt hier handelt es sich um ein Umsetzungsprodukt eines Polyesterpolyols mit Caprolacton. Der Polycaprolactonblock kann dabei ein Molekulargewicht von 80 bis 4000 aufweisen. Das gesamte Block-Coploymer gemäß Formel (1) hat dann ein Molekulargewicht zwischen 1000 und 15000, vorzugsweise zwischen 2500 und 8000. Auch für den Fall, daß R¹ und/oder R² ein Polyetherblock, ein Polybutadienblock, ein weiterer Polyesterblock oder ein Polycarbonatblock sind, gelten für die Molekulargewichte in analoger Weise die vorgenannten Bereiche.

Die Hydroxylzahlen der erfindungsgemäßen Polyester-Block-Copolymeren liegen im Bereich zwischen 7,5 und 112, vorzugsweise zwischen 14 und 45. Dies entspricht einem Molekulargewichts-Bereich von 1000 bis 15000, vorzugsweise von 1500 bis 8000. Dabei liegt der Massenanteil des R¹ und/oder R²-Blocks zum Polyester-Block -O-A-O- zwischen etwa 5 und 300%.

Als Polyisocyanate können eine Vielzahl von aliphatischen, cycloaliphatischen oder aromatischen Polyisocyanaten eingesetzt werden.

Beispiele für geeignete aromatische Polyisocyanate sind: Alle Isomeren des Toluylendiisocyanats (TDI) entweder in isomerenreiner Form oder als Mischung mehrerer Isomerer, Naphthalin-1,5-Diisocyanat, Diphenylmethan-4,4'-Diisocyanat (MDI), Diphenylmethan-2,4'-Diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyl-dimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat. Beispiele für geeignete cycloaliphatische Polyisocyanate sind die Hydrierungsprodukte der vorgenannten aromatischen Diisocyanate wie z.B. das 4,4'-Dicyclohexylmethandiisocyanat (H₁₂MDl), 1-Isocyanatomethyl-3-Isocyanato-1,5,5-Trimethyl-cyclohexan (Isophoron-Diisocyanat, IPDI), Cyclohexan-1,4-Diisocyanat, hydriertes Xylylen-Diisocyanat (H₆XDI), 1-Methyl-2,4-diisocyanato-cyclohexan, m- oder p-Tetramethylxylendiisocyanat (m-TMXDI, p-TMXDI) und Dimerfettsäure-Diisocyanat. Beispiele für aliphatische Polyisocyanate sind Tetramethoxybutan-1,4-diisocyanat, Butan-1,4-diisocyanat, Hexan-1,6-Diisocyanat (HDI), 1,6-Diisocyanato-2,2,4-Trimethylhexan, 1,6-Diisocyanato-2,4,4-Trimethylhexan sowie 1,12-Dodecandiisocyanat (C₁₂Dl).

Die erfindungsgemäßen Polyurethan-Schmelzklebstoff-Zusammensetzungen können ggf. noch weitere Prepolymere in Form von Umsetzungsprodukten eines der oben genannten Polyisocyanate mit einem Polyesterpolyol und/oder ggf. einem Umsetzungsprodukt eines der oben genannten Polyisocyanate mit einem Polyetherpolyol als Zumischkomponente enthalten.

Beispiele für derartige Polyesterpolyole sind Umsetzungsprodukte von Dicarbonsäuren, wie Glutarsäure, Adipinsäure, Pimelinsäure, Korksäure, Azelainsäure, Sebacinsäure, Undecandisäure, Dodecandisäure, 3,3-Dimethylglutarsäure,Terephthalsäure, Isophthalsäure, Dimerfettsäure oder deren Mischungen mit niedermolekularen difunktionellen Alkoholen wie z.B. Ethylenglykol, Propylenglykol, 1,4-Butandiol, 1,6-Hexandiol, 1,8-Octandiol, 1,10-Decandiol, 1,12-Dodecandiol, Dimerfettalkohol, Diethylenglykol, Triethylenglykol oder deren Mischungen. Ggf. können die geeigneten Polyesterpolyole auch leicht verzweigt sein, d.h. zu ihrer Herstellung wurden untergeordnete Mengen einer Tricarbonsäure bzw. eines trifunktionellen Alkohols, z.B. Glycerin oder Trimethylolpropan, mitverwendet. Eine weitere Gruppe der erfindungsgemäß mit einzusetzenden Polyester-Polyole sind die Polyester auf der Basis von ε-Caprolacton, auch "Polycaprolactone" genannt. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate.

Beispiele für die erfindungsgemäß mitzuverwendenden Polyetherpolyole für die weiteren Prepolymeren sind di- und/oder trifunktionelle Polypropylenglycole im Molekulargewichtsbereich von 200 bis 15000, vorzugsweise im Bereich von 400 bis 4000. Es können auch statistische und/oder Blockcopolymere des Ethylenoxids und Polylenoxids eingesetzt werden.

Die Umsetzung der einzelnen Polyolbausteine gemäß Formel (I) oder des weiteren Polyesterpolyols oder des Polyetherpolyols mit dem Polyisocyanat erfolgt in an sich bekannter Weise durch Umsatz eines stöchiometrischen Überschusses an Polyisocyanat gegenüber der Polyolverbindung. Üblicherweise trägt das stöchiometrische Verhältnis von OH-Gruppen zu NCO-Gruppen 1:1,2 bis 1:15, vorzugsweise beträgt dieses Verhältnis 1:1,4 bis 1:2,5.

Zur Herstellung der Isocyanat-terminierten Polyurethanprepolymeren kann es notwendig sein, an sich bekannte Polyurethan-Katalysatoren zuzusetzen wie z.B. Verbindungen des 2- bzw. 4-wertigen Zinns, insbesondere Dicarboxylate des 2-wertigen Zinns bzw. Dialkylzinn-dicarboxylate bzw. Dialkylzinn-dialkoxylate einzusetzen.

Weiterhin kann es notwendig sein den Schmelzklebstoff-Zusammensetzungen zur beschleunigten Aushärtung mit der Feuchtigkeit der Umgebung Katalysatoren zuzusetzen, hier seien insbesondere acyclische als auch insbesondere cyclische Aminoverbindungen genannt, beispielhaft erwähnt sei Tetramethylbutan-diamin, Bis(Dimethylaminoethyl)ether, 1,4-Diazabicyclooctan (DABCO), 1,8-Diaza-bicyclo-(5.4.0)-undecen oder Morpholino-Derivate zuzusetzen. Beispiele für derartige Morpholino-Derivate sind:
Bis(2-(2,6-dimethyl-4-morpholino) ethyl)-(2-(4-morpholino) ethyl) amin, Bis(2-(2,6-dimethyl-4-morpholino) ethyl)-(2-(2,6-diethyl-4-morpholino) ethyl) amin, Tris(2-(4-morpholino) ethyl) amin, Tris(2-(4-morpholino) propyl) amin, Tris(2-(4-morpholino) butyl) amin, Tris(2-(2,6-dimethyl-4-morpholino) ethyl) amin, Tris(2-(2,6-diethyl-4-morpholino) ethyl) amin, Tris(2-(2-methyl-4-morpholino) ethyl) amin oder Tris(2-(2-ethyl-4-morpholino) ethyl) amin, Dimethylaminopropylmorpholin, Bis-(morpholinopropyl)-methylamin, Diethylaminopropylmorpholin, Bis-(morpholinopropyl)-ethylamin, Bis-(morpholinopropyl)-propylamin, Morpholinopropylpyrrolidon oder N-Morpholinopropyl-N'-methyl-piperazin, 2,2'-Dimorpholinodiethylether (DMDEE) oder Di-2,6-dimethylmorpholinoethyl)ether

Die einzusetzenden Mengen vorgenannten Katalysatoren können in weiten Grenzen variieren und richten sich nach dem Typ des Katalysators, seiner Aktivität, den Anwendungsbedingungen und den geforderten Lagerungsbedingungen für den Schmelzklebstoff. Für die vorgenannten Morpholinoderivate, insbesondere das besonders bevorzugte DMDEE, sind Katalysatorkonzentrationen zwischen 0,0002 und 1,5 Gew.% bezogen auf die gesamte Klebstoff-Formulierung üblich.

Weiterhin können die erfindungsgemäßen Zusammensetzungen weitere für Schmelzklebstoffe übliche Zusätze enthalten, beispielhaft erwähnt seien hier klebrig machende Harze, wie z.B. Abietinsäure, Abietinsäureester, Terpenharze, Terpenphenolharze oder Kohlenwasserstoffharze. Weiterhin können unter Umständen in untergeordneten Mengen Füllstoffe eingesetzt werden, z.B. Silikate, Talk, Calciumcarbonate, Tone, Ruß oder Farbpasten bzw. Pigmente.

Die Auswahl der Einzelkomponenten, insbesondere der Polyolkomponenten richtet sich nach dem Anwendungszweck und den erwünschten Endeigenschaften. Es wurde gefunden, daß durch die Blockstruktur der Polyester-Block-Copolymeren gemäß Formel (1) bei entsprechender Wahl der Blocklänge eine verbesserte Verträglichkeit gegenüber Schmelzklebstoffen auf Basis üblicher Polyesterpolyole des Standes der Technik erzielt werden, dies ist daran zu erkennen, daß die erfindungsgemäßen Schmelzklebstoff-Zusammensetzungen in der Regel im geschmolzenen Zustand transparent sind (solange sie keine Füllstoffe, Pigmente oder ähnliche Komponenten enthalten). Weiterhin wurden mit den erfindungsgemäßen Zusammensetzungen exzellente Kriechbeständigkeit und Grenzflächen-Haftungswerte beobachtet und zusätzlich sehr hohe Festigkeitswerte erzielt.

Die erfindungsgemäßen Schmelzklebstoffe eignen sich zur Verklebung einer Vielzahl von Substraten, insbesondere zur Verklebung von metallischen Substraten und ganz besonders zur Verklebung diverser Kunststoff-Substrate.

Beispiele für bevorzugte Anwendungsfelder der erfindungsgemäßen Schmelzklebstoffe sind die Montageverklebung in der Holz- und Möbelindustrie, die Clipsverklebung im Automobilbau. Bei letztgenanntem Anwendungsfeld werden die Clipse, auch "Retainer" genannt, aus ABS gegen harzgebundene Formteile, wie sie z.B. unter dem Handelsnamen "Empeflex" der Firma Empe im Handel sind, geklebt. Ein weiteres Anwendungsfeld ist die Profilummantelung im Holz-, Möbel- und Fensterbau. Hierbei werden PVC-Profile vollflächig mit PVC-Dekorfolien verklebt.

Die nachfolgenden Beispiele sollen die Erfindung näher erläutern wobei die Auswahl der Beispiele keine Beschränkung des Umfanges des Erfindungsgegenstandes darstellt. Bei den Zusammensetzungen sind dabei alle Mengenangaben Gewichtsteile, wenn nicht anders angegeben.

### Beispiele

### Beispiel 1

In einem Reaktionsbehälter werden 3600 g eines Polyesters (Hexandioldodecanoat, OH-Zahl 32,5 mg KOH / g; Säurezahl 2 mg KOH / g) bei 120 °C vorgelegt. Unter Stickstoffatmosphäre wurden bei 120 °C zu dem schmelzflüssigen Polyester 365 g Caprolactonmonomer, sowie in einer Menge von 1.9 g Butylzinn-tris(2-ethylhexanoat) als Katalysator zugegeben. Nach 4 Std Reaktionszeit bei 160 °C war die Reaktion beendet. Spuren restlichen Caprolactonmonomers wurden im Vakuum entfernt. Das Polyester-Block-Copolymer wies folgende Kennzahlen auf: OH-Zahl 29 mg KOH / g; Säurezahl 1,9, mg KOH / g, Schmelzpunkt 69°C.

### Beispiel 2

Aus den folgenden Polyesterdiolen und Diisocyanaten wurde ein reaktiver Schmelzklebstoff hergestellt:
- 24,18 Teile: amorpher Copolyester auf Basis Terephthalsäure, Isophthalsäure, Neopentylglycol, Hexandiol und Ethylenglycol, OH-Zahl 21, T_{g} 40°C
- 11,46 Teile: Copolyester auf Basis Adipinsäure, Neopentylglycol, Hexandiol und Ethylenglycol, OH-Zahl 21, T_{g} -50°C
- 32,74 Teile: Copolyester auf Basis Adipinsäure und Hexandiol, OH-Zahl 30, Schmelzpunkt 60°C
- 20,72 Teile: Polyester-Block-Copolymer gemäß Beispiel 1
- 10,88 Teile: 4,4'-Diphenylmethandiisocyanat

Der Schmelzklebstoff hatte die folgenden Kennzahlen:
NCO-Gehalt: 1,8%
Viskosität bei 130°C (Brookfield Thermocell): 12000 mPa.s
Mit dem so hergestellten Schmelzklebstoff wurden Haftungsversuche auf verschiedenen Substraten durchgeführt und dabei die folgenden Ergebnisse erhalten:

| **Substrat** | **Art des Bruchs** |
|---|---|
| Leder | 1 MaB |
| Birkenstocksohle 2 | MaB |
| Weich PVC | 3 WB |
| PVC weiß | 4 leichter WB |
| ABS schwarz | 3 leichter WB |
| ABS weiß | 2 leichter WB |
| NBR | 3 leichter WB |
| Spanplatte | 1 MaB |
| Holz | 3 leichter MaB |
| Glas | 2 kohäsiv |

Dabei bedeuten:
- WB: Weißbruch im Subsratmaterial
- MaB: Materialbruch im Substrat
- MiB: Mischbruch im Substrat und in der Klebefuge
- PVC: Polyvinylchlorid
- ABS: Acrynitril-Butadien- Styrol
- NBR: Nitrilkautschuk
- kohäsiv: Bruch in der Klebstoffuge

Die Bewertung der Haftung erfolgte nach folgender Skala: 1= sehr gute Haftung bis 6= sehr schlecht Haftung.

Aus diesen Haftungsversuchen wird deutlich, daß die erfindungsgemäßen Schmelzklebstoffe auf einer Vielzahl von Substraten gute Haftungseigenschaften haben.

## Patentansprüche

1. Feuchtigkeitshärtende Polyurethan Schmelzklebstoff-Zusammensetzung mit reaktionsfähigen Isocyanatgruppen enthaltend
a.) ein Umsetzungsprodukt eines Polyisocyanats mit einem Polyester-Block-Copolymer der Formel (I),
HO-R²-O-A-O-R¹-OH (I),
welches herstellbar ist durch Kondensation eines entsprechenden carboxylterminierten Polyesters mit einem Polyetherol, einem hydroxyfunktionellen Polybutadien, einem Polycarbonatdiol oder einem weiteren Polyesterdiol oder durch Aufpolymerisieren von Caprolacton auf einen hydroxyfunktionellen Polyester.
b.) ggf. ein Umsetzungsprodukt eines Polyisocyanats mit einem Polyesterpolyol und/oder
c.) ggf. ein Umsetzungsprodukt eines Polyisocyanats mit einem Polyetherpolyol wobei A=―R²―X―C(O)―R⁴―C(O)―X―R³―,
R¹ und R² unabhängig voneinander (-(CH₂)₄-O-(CH₂)₄-O)ₒ₋₁-(CH₂)₄-O-(CH₂)₄, (-C₃H₆-O-C₃H₈-O)ₒ₋₁-C₃H₆-O-C₃H₆, (-C₂H₄-O-C₂H₄-O)ₚ₋₁-C₂H₄-O-C₂H₄, der Rest eines Polybutadiens, Polycarbonates, eines Polyesters oder eines Polycaprolactons oder deren Kombination sein kann,
X + R³ zusammen eine kovalente Bindung oder X = O und R³ = -(CH₂)ₘ- und
R⁴ ein Rest eines Carboxyl-terminierten Polyesters aus einem C₄ bis C₁₂ - Diol und einer C₆ bis C₁₄ - Dicarbonsäure nach Entfernen der terminalen Carboxylgruppen bedeuten und
m = 4 bis 12, o = 5 - 80 und p = 5 - 80 ist.

2. Zusammensetzung nach Anspruch 1, **dadurch gekennzeichnet, daß** der Carboxyl-terminierte Polyesterblock A aus aliphatischen Dicarbonsäuren, ausgewählt aus Adipinsäure, Pimelinsäure, Korksäure, Azelainsäure, Sebacinsäure, Undecandisäure, Dodecandisäure, oder deren Mischungen und difunktionellen Alkoholen ausgewählt aus Butandiol, Hexandiol, Octandiol, Decandiol, Dodecandiol oder deren Mischungen aufgebaut ist.

3. Zusammensetzung nach Anspruch 2 **dadurch gekennzeichnet, daß** der Polyesterblock ein Molgewicht zwischen 1000 und 10000, vorzugsweise zwischen 1500 und 8000 hat.

4. Zusammensetzung nach Anspruch 1, **dadurch gekennzeichnet, daß** R¹ und/oder R² ein Molekulargewicht zwischen 80 und 15000, vorzugsweise zwischen 600 und 4000 haben.

5. Zusammensetzung nach Anspruch 1, **dadurch gekennzeichnet, daß** R¹ und/oder R² der Rest eines Polycaprolactons sind und ein Molekulargewicht zwischen 80 und 4000, vorzugsweise zwischen 500 und 4000 haben.

6. Zusammensetzung nach mindestens einem der vorhergehenden Ansprüche, **dadurch gekennzeichnet, daß** das Polyesterpolyol der Komponente b.) aus aliphatischen Dicarbonsäuren ausgewählt aus Adipinsäure, Pimelinsäure, Korksäure, Azelainsäure, Sebacinsäure, Undecandisäure, Dodecandisäure, Dimersäure, 3,3-Dimethylglutarsäure, aromatischen Dicarbonsäuren ausgewählt aus Terephthalsäure, Isophthalsäure, Naphthalindicarbonsäure oder deren Mischungen und difunktionellen Alkoholen ausgewählt aus Ethylenglycol, Propylenglycol, Butandiol, Diethylenglycol, Triethylenglycol, Dipropylenenglycol, Tripropylenglycol, Hexandiol, Octandiol, Decandiol, Dodecandiol, Neopentylglycol, Dimerdiol, Hydroxypivalinsäureneopentyl-glycol oder deren Mischungen aufgebaut ist.

7. Zusammensetzung nach mindestens einem der vorhergehenden Ansprüche, **dadurch gekennzeichnet, daß** die Komponente c.) ein Polypropylenglycol, Polyethylenglycol, Copolymer aus Ethylenoxid und Propylenoxid oder ein Poly(oxytetramethylen)glycol ist.

8. Zusammensetzung nach mindestens einem der vorhergehenden Ansprüche,
**dadurch gekennzeichnet, daß** sie
5 bis 100 Gew.% der Komponente a.)
0 bis 80 Gew.% der Komponente b.) und
0 bis 80 Gew.% der Komponente c.)
enthält.

## Claims

1. Moisture-hardening polyurethane melt-adhesive composition with reactive isocyanate groups, containing
a) a reaction product of a polyisocyanate with a polyester block copolymer of the formula (I),
HO―R²―O―A―O―R¹―OH (I)
which can be obtained by condensation of a corresponding carboxyl-terminated polyester with a polyether polyol, a hydroxyfunctional polybutadiene, a polycarbonate diol or a further polyester diol or by polymerising caprolactone onto a hydroxyfunctional polyester,
b) optionally a reaction product of a polyisocyanate with a polyester polyol and/or
c) optionally a reaction product of a polyisocyanate with a polyether polyol
where A = -R²―X―C―(O)―R⁴―C (O)―X―R³―,
R¹ and R² independently of one another may be (-(CH₂)₄-O-(CH₂)₄-O)₀₋₁-(CH₂)₄-O-(CH₂)₄, (-C₃H₆-O-C₃H₈-O) ₒ₋₁-C₃H₆-O-C₃H₆, (-C₂H₄-O-C₂H₄-O)ₚ₋₁-C₂H₄-O-C₂H₄, the radical of a polybutadiene, polycarbonate, polyester or of a polycaprolactone or combinations thereof,
X + R³ together denote a covalent bond or X = O and R³ = -(CH₂)ₘ- and R⁴ denotes a radical of a carboxyl-terminated polyester of a C₄ to C₁₂ diol and a C₆ to C₁₄ dicarboxylic acid after removal of the terminal carboxyl groups, and
m = 4 to 12, o = 5 to 80 and p = 5 to 80.

2. Composition according to claim 1, **characterised in that** the carboxyl-terminated polyester block A is composed of aliphatic dicarboxylic acids selected from adipic acid, pimelic acid, suberic acid, azelaic acid, sebacic acid, undecanedioic acid, dodecanedioic acid or their mixtures, and dihydric alcohols selected from butanediol, hexanediol, octanediol, decanediol, dodecanediol or their mixtures.

3. Composition according to claim 2, **characterised in that** the polyester block has a molecular weight between 1000 and 10,000, preferably between 1500 and 8000.

4. Composition according to claim 1, **characterised in that** R¹ and/or R² have a molecular weight between 80 and 15,000, preferably between 600 and 4000.

5. Composition according to claim 1, **characterised in that** R¹ and/or R² are the radical of a polycaprolactone and have a molecular weight between 80 and 4000, preferably between 500 and 4000.

6. Composition according to at least one of the preceding claims, **characterised in that** the polyester polyol of the component b) is composed of aliphatic dicarboxylic acids selected from adipic acid, pimelic acid, suberic acid, azelaic acid, sebacic acid, undecanedioic acid, dodecanedioic acid, dimer acid, 3,3-dimethylglutaric acid, aromatic dicarboxylic acids selected from terephthalic acid, isophthalic acid, naphthalenedicarboxylic acid or their mixtures, and dihydric alcohols selected from ethylene glycol, propylene glycol, butanediol, diethylene glycol, triethylene glycol, dipropylene glycol, tripropylene glycol, hexanediol, octanediol, decanediol, dodecanediol, neopentyl glycol, dimer diol, hydroxypivalic acid neopentyl glycol or their mixtures.

7. Composition according to at least one of the preceding claims, **characterised in that** the component c) is a polypropylene glycol, polyethylene glycol, copolymer of ethylene oxide and propylene oxide, or a poly(oxytetramethylene) glycol.

8. Composition according to at least one of the preceding claims, **characterised in that** it contains
5 to 100 wt.% of component a)
0 to 80 wt.% of component b) and
0 to 80 wt.% of component c).

## Revendications

1. Composition de colle fusible à base de polyuréthane, durcissant à l'humidité, avec des groupes isocyanates susceptibles de réagir contenant
a) un produit de réaction d'un polyisocyanate avec un copolymère séquencé de polyester de formule (I),
HO―R²―O―A―O―R¹―OH (I),
lequel peut être préparé par condensation d'un polyester correspondant à terminaison carboxyle avec un polyéthérol, un polybutadiène à fonction hydroxy, un polycarbonate-diol ou un autre polyesterdiol ou par polymérisation de caprolactone sur un polyester à fonction hydroxy,
b) éventuellement un produit de réaction d'un polyisocyanate avec un polyesterpolyol et/ou
c) éventuellement un produit de réaction d'un polyisocyanate avec un polyétherpolyol
où A =―R²―X―C(D)― R⁴―C(O)―X―R³,
R¹ et R² peuvent être indépendamment l'un de l'autre (-(CH₂)₄-O-(CH₂)₄-O)ₒ₋₁-(CH₂)₄-O-(CH₂)₄, (-C₃H₆-O-C₃H₈-O)ₒ₋₁-C₃H₆-OC₃H₈, (-C₂H₄-O-C₂H₄-O)ₚ₋₁-C₂H₄-O-C₂H₄, le reste d'un polybutadiène, d'un polycarbonate, d'un polyester ou d'une polycaprolactone, ou leur combinaison,
X + R³ représentent ensemble une liaison covalente ou X = O et R³ = -(CH₂)ₘ- et R⁴ représente un résidu d'un polyester à terminaison carboxyle issu d'un diol en C₄ à C₁₂ et d'un acide dicarboxylique en C₆ à C₁₄ après élimination des groupes carboxyle terminaux et
m = 4 à 12, o = 5 à 80 et p = 5 à 80.

2. Composition selon la revendication 1, **caractérisée en ce que** la séquence polyester à terminaison carboxyle A est construite à partir d'acides dicarboxyliques aliphatiques, choisis parmi l'acide adipique, l'acide pimélique, l'acide subérique, l'acide azélaïque, l'acide sébacique, l'acide undécanedioïque, l'acide dodécanedioïque, ou leurs mélanges, et à partir d'alcools difonctionnels choisis parmi le butanediol, l'hexanediol, l'octanediol, le décanediol, le dodécanediol, ou leurs mélanges.

3. Composition selon la revendication 2, **caractérisée en ce que** la séquence polyester possède une masse molaire comprise entre 1 000 et 10 000, de préférence entre 1 500 et 8 000.

4. Composition selon la revendication 1, **caractérisée en ce que** R¹ et/ou R² possèdent une masse moléculaire comprise entre 80 et 15 000, de préférence entre 600 et 4 000.

5. Composition selon la revendication 1, **caractérisée en ce que** R¹ et/ou R² constituent le résidu d'un polycaprolactone et possèdent une masse moléculaire comprise entre 80 et 4 000, de préférence entre 500 et 4 000.

6. Composition selon au moins l'une des revendications précédentes, **caractérisée en ce que** le polyesterpolyol du composant b) est construit à partir d'acides dicarboxyliques aliphatiques choisis parmi l'acide adipique, l'acide pimélique, l'acide subérique, l'acide azélaïque, l'acide sébacique, l'acide undécanedioïque, l'acide dodécanedioïque, un acide dimère, l'acide 3,3-diméthylglutarique, à partir d'acides dicarboxyliques aromatiques choisis parmi l'acide téréphtalique, l'acide isophtalique, l'acide naphtalènedicarboxylique ou leurs mélanges, et à partir d'alcools difonctionnels choisis parmi l'éthylèneglycol, le propylèneglycol, le butanediol, le diéthylèneglycol, le triéthylèneglycol, le dipropylèneglycol, le tripropylèneglycol, l'hexanediol, l'octanediol, le décanediol, le dodécanediol, le néopentylglycol, un diol dimère, le néopentylglycol de l'acide hydroxypivalique, ou leurs mélanges.

7. Composition selon au moins l'une des revendications précédentes, **caractérisée en ce que** le composant c) représente un polypropylèneglycol, un polyéthylèneglycol, un copolymère d'oxyde d'éthylène et d'oxyde de propylène, ou un poly(oxytétraméthylène)glycol.

8. Composition selon au moins l'une des revendications précédentes, **caractérisée en ce qu'**elle contient
5 à 100% en poids du composant a)
0 à 80% en poids du composant b) et
0 à 80% en poids du composant c).
